# EUROPEAN PATENT SPECIFICATION

(11) **EP 3 271 144 B1**
(45) Date of publication and mention of the grant of the patent: **05.08.2020**
(21) Application number: 15885644.3
(22) Date of filing: 03.06.2015
(51) Int. Cl.: B33Y 30/00, B33Y 50/02, B29C 64/129, B29C 64/277

(54) **3D PRINTER**
3D-DRUCKER
IMPRIMANTE 3D

(30) Priority: 19.03.2015 KR 20150038278
(43) Date of publication of application: 24.01.2018
(73) Proprietor: LG ELECTRONICS INC., Yeongdeungpo-gu Seoul, 07336 (KR)
(72) Inventor: KIM, Hyoungseok, Seoul, 06772 (KR); CHOI, Kyujin, Seoul 06772 (KR)
(74) Representative: Katérle, Axel
(86) International application number: PCT/KR2015/005591
(87) International publication number: WO 2016/148341

(56) References cited:
- EP-A1- 2 226 683
- CN-A- 103 921 444
- CN-A- 103 921 444
- KR-A- 20130 013 490
- US-A1- 2009 267 269
- US-A1- 2011 313 560
- US-A1- 2011 313 560
- US-A1- 2012 063 131
- US-B1- 6 180 050
- US-B1- 6 180 050

## Description

### Technical Field

The present disclosure relates to a 3D printer.

### Background Art

3D printers represent apparatuses for modeling a three-dimensional (3D) solid object, but a two-dimensional object such as types or pictures, on the basis of an inputted drawing. 3D printers are being utilized for modeling an object or manufacturing a sample before mass production in industrial fields. In resent years, 3D printers are being gradually expanded in application ranges to domestic, educational, or industrial use.

3D printers may be classified into stereolithography (SLA) type printers, ink-jet type printers, and digital light processing (DLP) type printers according to operation manners. Here, such a DLP type printer may represent a printer in which light is point-illuminated to solidify a modeling material, like a projector.

A DLP type 3D printer according to the related art is disclosed in Korean Patent Publication No. 10-2013-0038101. In a 3D printer such as the DLP type 3D printer disclosed in the patent gazette, light is reflected by using a DMD device to cure a modeling material that is a photocurable material, like a DLP projector.

However, in case of the LDP type 3D printer, a separate lens and mirror may be required. Thus, a product may increase in volume and weight to limit a build size.

Also, according to the related art, a boundary surface may be modeled according to a resolution and pixel size, or when a product is driven, heat may be generated to damage the model or product. Document EP 2 226 683 A1 discloses a 3D printer in accordance with the preamble of claim 1.

### Disclosure of Invention

### Technical Problem

Embodiments provide a 3D printer that is capable of solving the above-described limitations.

### Solution to Problem

The invention is defined by the combination of features of claim 1. In one embodiment, a 3D printer includes: a material casing accommodating a modeling material for modeling a 3D model; a light source unit supplying light onto the modeling material to cure the modeling material; a stage on which the modeling material cured by the light source unit is seated, the stage being disposed movable into the material casing; a stage driving unit connected to the stage to provide a driving force for moving the stage; and a control unit controlling operations of the light source unit and the stage driving unit, wherein the light source unit is provided as an LED assembly for surface-illustrating light onto the modeling material.

The light source unit may include: an LED board electrically connected to the control unit; and an LED array disposed on the LED board, the LED array being constituted by a plurality of LEDs.

The control unit may control the intensity of light emitted from the LED array.

The control unit may independently control the intensity of light emitted form each of the LEDs.

The control unit may control a temperature of the LED array.

The control unit may independently control a temperature of each of the LEDs.

The plurality of LEDs may include LEDs having at least two wavelength bands.

The plurality of LEDs may include ultraviolet light emitting diodes.

The light source unit has an area corresponding to that of the bottom surface of the modeling material within the material casing.

The light source unit may be disposed parallel to a bottom surface of the modeling material.

The modeling material may include a photocurable liquid resin composite.

The details of one or more embodiments are set forth in the accompanying drawings and the description below. Other features will be apparent from the description and drawings, and from the claims.

### Advantageous Effects of Invention

According to the various embodiments as described above, the 3D printer that can be miniaturized and lightweight and thus not be limited in build size may be provided.

Furthermore, according to the foregoing embodiments, the 3D printer which can minimize the heat generation to prevent the model or product from being damaged and realize the low power consumption and low noises may be provided.

Also, the according to the foregoing embodiments, the 3D printer in which the individual LED is independently controlled to realize the uniform 3D model may be provided.

### Brief Description of Drawings

Fig. 1 is a view for explaining a 3D printer according to an embodiment.
Fig. 2 is a block diagram of the 3D printer of Fig. 1.
Figs. 3 to 5 are views for explaining various arrangements of a light source unit of the 3D printer of Fig. 1.
Figs. 6 to 8 are views for explaining a method for controlling the intensity of light emitted from the light source unit of the 3D printer of Fig. 1.
Fig. 9 is a flowchart for explaining a method for controlling a temperature of the light source unit of the 3D printer of Fig. 1.
Figs. 10 to 10 are views for explaining methods for controlling the 3D printer of Fig. 1 by using a mobile device according to various embodiments.

### Mode for the Invention

Exemplary embodiments of the present disclosure will be described below in more detail with reference to the accompanying drawings. The description of the present disclosure is intended to be illustrative, and those with ordinary skill in the technical field of the present disclosure pertains will be understood that the present disclosure can be carried out in other specific forms without changing the technical idea or essential features. Also, for helping understanding of the invention, the drawings are not to actual scale, but are partially exaggerated in size.

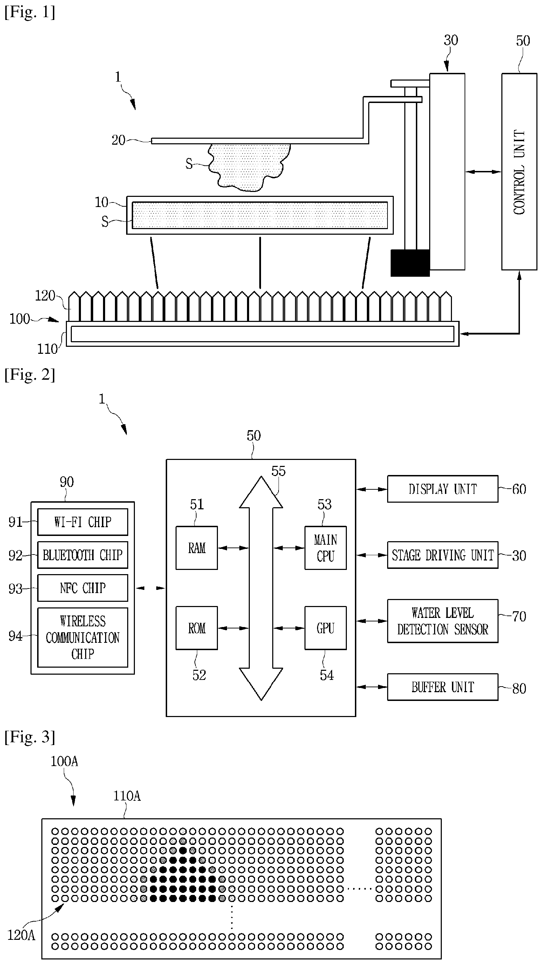

Fig. 1 is a view for explaining a 3D printer according to an embodiment, and Fig. 2 is a block diagram of the 3D printer of Fig. 1.

Referring to Figs. 1 to 2, a 3D printer 1 includes a material casing 10, a stage 20, a stage driving unit 30, a control unit 50, a display unit 60, a water level detection sensor 70, a buffer unit 80, a communication unit 90, and a light source unit 100.

The material casing 10 accommodates a modeling material S for modeling a 3D model. Here, the modeling material S may be a photocurable liquid resin composite. Alternatively, various photocurable liquid resin composites may be used as the modeling material S in consideration of desired quality when the 3D model is modeled.

The stage 20 is disposed above the material casing 10. The modeling material S that is cured by the light source unit 100 is seated on the stage 20. The stage 20 may be movable into the material casing 10 to seat the modeling material S thereon. Since the stage 20 is well known, its detailed description will be omitted below.

The stage driving unit 30 is connected to the stage 20 to provide a driving force for moving the stage 20. The stage driving unit 30 provides a driving force for three axially moving the stage 20 and be electrically connected to the control unit 50 that will be described below in detail. Since the stage driving unit 30 is well known, its detailed description will be omitted below.

The control unit 50 is a component for controlling operations of the stage driving unit 30 and the light source unit 100 and an overall operation of the 3D printer 1. The control unit 50 may control the three-axial movement of the stage driving unit 30 and an on/off operation of the light source unit 100.

Also, the control unit 50 may control the intensity of light emitted from the light source unit 100 and a temperature of the light source unit 100, particularly, the intensity of light and temperature of an LED array 120 that will be described below. Here, the control unit 50 may independently control the intensity and temperature of each of LEDs of the LED array 120.

The control unit 50 may include a RAM 51, a ROM 52, a main CPU 53, a graphic process unit (GPU) 54, and a bus 55. The RAM 51, the ROM 52, the main CPU 53, and the GPU 54 may be connected to each other through the bus 55. In addition, the control unit 660 may further include various interfaces, but its drawing or descriptions will be omitted.

The main CPU 53 may perform booting by using O/S. A command set for booting a system may be stored in the ROM 52. When a turn-on command is inputted to supply a power, the main CPU 53 may copy the O/S to the RAM 51 according to a command stored in the ROM 52 to execute the O/S, thereby booting the system. When the system is booted, the main CPU 53 may copy various programs to the RAM 51 to execute the copied programs, thereby performing various operations.

The GPU 54 may generate wallpaper, an icon display screen, a lock screen, and other transition screen according to the control of the main CPU 53. The GPU 54 may calculate attribute values, such as coordinate values, shapes, sizes, colors, and the like, of objects within each of the screens on the basis of the screen data. The GPU 54 may generate the above-described various screens on the basis of the calculated attribute values. The generated screen data may be stored in the buffer unit 80. The screen data stored in the buffer unit 80 may be displayed by the display unit 60 that will be described below in detail.

The display unit 60 may be electrically connected to the control unit 50 to visually display various operations performed by the 3D printer 1 to a user. Since the display unit 60 is well known, its detailed description will be omitted below.

The water level detection sensor 70 may be electrically connected to the control unit 50 to detect a level of the modeling material within the material casing 10. Since the water level detection sensor 70 is well known, its detailed description will be omitted below.

The buffer unit 80 may be a component for storing screen data to be displayed on the display unit 60. For this, the buffer unit 80 may store various screen data that is capable of being displayed on the display unit 60.

The communication unit 90 may be a component for communicating with various types of external devices through various types of communication manners. The communication unit 90 may include a Wi-Fi chip 91, a Bluetooth chip 92, an NFC chip 93, and a wireless communication chip 94.

The Wi-Fi chip 91, the Bluetooth chip 92, and the NFC chip 93 may communicate in Wi-Fi communication, Bluetooth communication, and NFC communication manners, respectively. The wireless communication chip 94 may represent a chip for communicating according to various communication standards such as IEEE, Zigbee, 3rd generation (3G), 3rd generation partnership project (3GPP), and long term evolution (LTE). The communication unit 90 may include at least one chip among the above-described various chips or a chip according to the communication standard. Thus, the communication unit 620 may communicate with an external server or other devices such as a mobile device, which will be described below, by using the chip.

The light source unit 100 may be disposed on a side of the material casing 10, i.e., a lower side of the material casing 10 in the current embodiment to emit light onto the modeling material S so as to cure the modeling material S for modeling the 3D model. The light source unit 100 may be electrically connected to the control unit 50 as described above.

The light source unit 100 may be fixed to a lower portion of the material casing 10 or movably disposed on the lower portion of the material casing 10. Here, the light source unit 100 may be disposed in parallel to a bottom surface of the modeling material S. According to the invention, the light source unit 100 has an area corresponding to that of the bottom surface of the modeling material S within the material casing 10. Thus, the light source unit 100 may more uniformly supply light onto the modeling material S when the light is supplied onto the modeling material S.

In the current embodiment, the light source unit 100 may be provided with an LED assembly that surface-illuminates light onto the modeling material S. That is, in the current embodiment, the light source unit 100 may uniformly supply light onto the modeling material S in a surface illumination manner, but a point illumination manner.

The light source unit 100 includes an LED board 110 and an LED array 120.

The LED board 110 is electrically connected to the control unit 50. The LED board 110 may be disposed to be spaced apart from the material casing 10. In the current embodiment, the LED board 110 may be disposed to be spaced a predetermined distance from a lower portion of the material casing 10.

The LED array 120 may be disposed on the LED board 110 and be provided in plurality. In the current embodiment, the plurality of LEDs may be provided with ultraviolet light emitting diodes. Also, the plurality of LEDs may be constituted by LEDs having at least two wavelength bands. That is, the plurality of LEDs having wavelength bands different from each other may be provided.

Hereinafter, the light source unit 100 according to the current embodiment will be described in more detail.

Figs. 3 to 5 are views for explaining various arrangements of a light source unit of the 3D printer of Fig. 1.

Fig. 3 is a schematic view of a fixed light source unit 100A.

Referring to Fig. 3, the light source unit 100A includes an LED board 110A and an LED array 120A. The LED board 110A may have an area corresponding to that of the bottom surface of the modeling material (see reference symbol S of Fig. 1) within the material casing (see reference numeral 10 of Fig. 1). Also, LEDs of the LED array 120A may be independently controlled by the above-described control unit 50. Thus, the corresponding LEDs may be individually controlled according to a shape of a 3D model to supply light. That is, the LEDs for respective pixels on one layer may be controlled at the same time to more quickly model a 3D model.

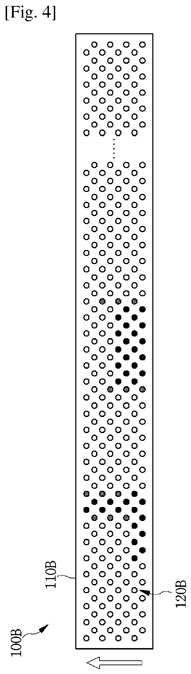

Fig. 4 is a schematic view of a movable light source unit 100B.

Referring to Fig. 4, the light source unit 100B includes an LED board 110B and an ELD array 120B. The LED board 110B may have a long side corresponding to the material casing 10 or the modeling material S of the material casing 10. The LED board 110B may have a short side having a length less than that of the material casing 10 or the modeling material S of the material casing 10.

The LED board 110B may be movable along a longitudinal direction of the short side. Thus, the light source unit 100B according to the current embodiment may have a size less than that of the above-described light source unit 100A. Thus, an LED having a relatively small size may be required.

A resolution of the light source unit 100B according to the current embodiment may increase by increasing a degree of integration according to a cross level due to the movement of the light source unit 100B. According to the current embodiment, the 3D model may be realized by using the integral intensity of light in consideration of a curing time of the modeling material and a moving time of the light source unit 100B through controls of an on/off operation of each LED and the intensity of light.

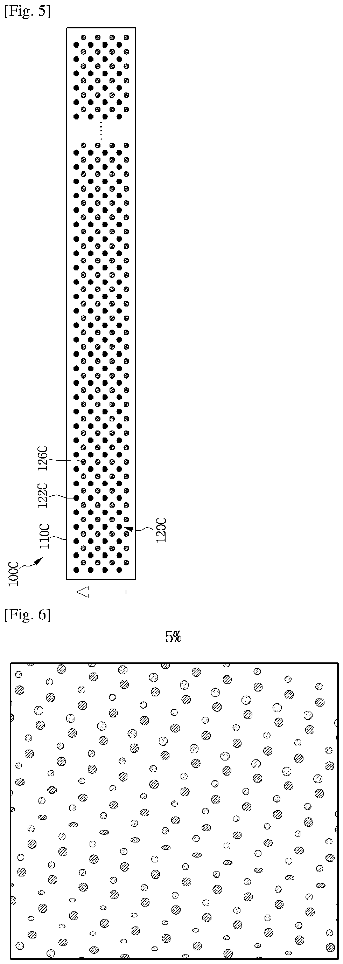

Fig. 5 is a schematic view of a movable light source unit 100C in which LEDs having wavelength bands different from each other are combined with each other.

Referring to Fig. 5, an LED board 110C and LED array 120C of the light source unit 100C may be similar to the LED board 110B and LED array 120B of the above-described light source unit 100B.

According to the current embodiment, a plurality of LEDs 122C and 126C provided in the LED array 120C include a first LED group 122C and second LED group 126C which have wavelength bands different from each other.

The first LED group 122C and the second LED group 126C may have photoinitiator absorption peaks different from each other. Thus, in the current embodiment, the model having structures different from each other according to a light emitting wavelength band for each pixel unit may be realized.

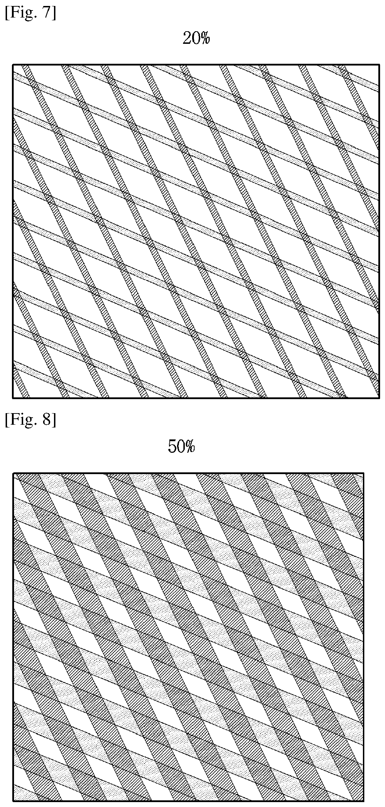

Figs. 6 to 8 are views for explaining a method for controlling the intensity of light emitted from the light source unit of the 3D printer of Fig. 1.

Referring to Figs. 6 to 8, according to the current embodiment, the intensity of light of the light source unit (see reference numeral 100 of Fig. 1) may be controlled to variously realize a gray scale of the 3D model (see reference symbol S of Fig. 1). That is, as illustrated in the drawings, the intensity of light of the light source unit 100 may be adjusted to realize the gray scale of the desired 3D model S. Here, the control unit (see reference numeral 50 of Fig. 1) may control the intensity of light of each of the LEDs to variously secure a range of the gray scale. Thus, according to the current embodiment, when the 3D model S is modeled, a boundary surface of the 3D model may be smoothly modeled, and also, a modeling rate may be changeable.

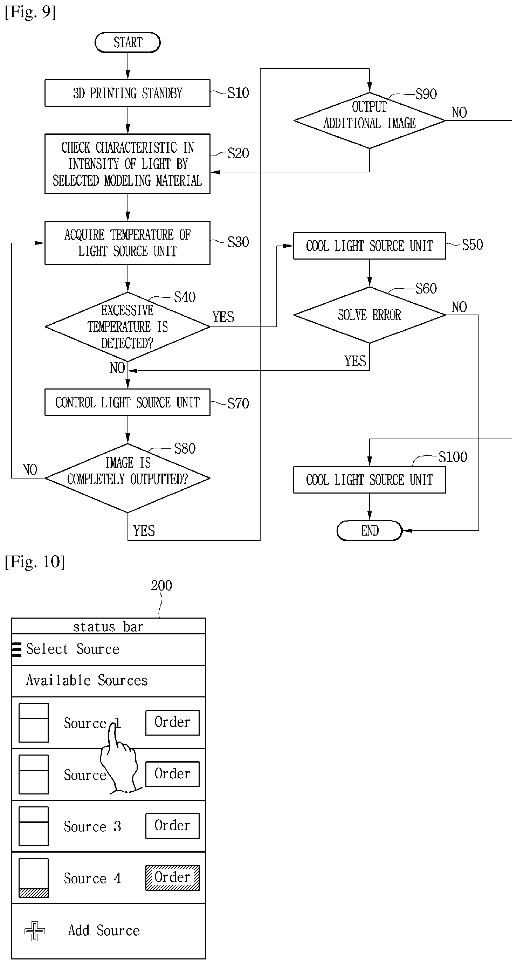

Fig. 9 is a flowchart for explaining a method for controlling a temperature of the light source unit of the 3D printer of Fig. 1.

Referring to Fig. 9, as described above, the control unit (see reference numeral 50 of Fig. 1) may control a temperature of the light source unit (see reference numeral 100 of Fig. 1), more particularly, a temperature of each LED of the light source unit 100.

According to an operation of the 3D printer (see reference numeral 1 of Fig. 1) that reflects the above-described function, the 3D printer 1 is turned on when a 3D model is modeled, and then, 3D printing preferentially stands by (S10). Thereafter, the 3D printer 1 checks a characteristic in intensity of light of the selected modeling material (S20).

Thereafter, the 3D printer 1 may acquire a temperature of the light source unit (see reference numeral 100 of Fig. 1) corresponding to the characteristic of the intensity of light of the modeling material (S30). If the light source unit has an excessive temperature, the 3D printer 1 cools the light source unit (S50). On the other hand, if the light source unit does not have the excessive temperature, the 3D printer 1 controls an operation of the light source unit 100 (S70).

When the light source unit is cooled, the 3D printer 1 checks whether an error with respect to the light source unit 100 is solved (S60). When it is determined that the error is solved, the 3D printer 1 controls an operation of the light source unit 100. On the other hand, when it is determined that the error is not solved, an operation of the 3D printer 1 may be finished.

The 3D printer 1 controls the operation of the light source unit. When an image is completely outputted (S80), the 3D printer checks whether an additional image is outputted (S90). If the output of the image is not completed, the 3D printer acquires a temperature of the light source unit again (S30) to return the precedent flow.

If an additional output of an image is required (S90), the process returns again to the precedent flow in which the characteristics in intensity of light of the selected modeling material is checked (S20). If the additional output of the image is not required, the 3D printer cools the light source unit (S100) to finish the printing.

As described above, the 3D printer 1 according to the current embodiment may control the temperature of the light source unit 100 to control heat generated when the 3D printer 1 operates. Thus, the 3D printer 1 according to the current embodiment may prevent the model from being deformed when the 3D model is modeled. In addition, damage of the 3D printer 1 due to the heat may be prevented.

As described above, the 3D printer 1 according to the current embodiment includes the light source unit 100 constituted by the LED board 110 and the LED array 120. Thus, the 3D printer 1 may be miniaturized and lightweight without being limited in build size through the light source unit 100.

Furthermore, in the 3D printer 1 according to the current embodiment, the light source unit 100 may be controlled in temperature to minimize the heat generation and prevent the model or product from being damaged, thereby providing the 3D printer 1 that is capable of realizing the low power consumption and low noises.

Also, the 3D printer 1 according to the current embodiment may provide the 3D printer 1 that is capable of realizing a uniform 3D model by independently controlling each of the LEDs.

Figs. 10 to 10 are views for explaining methods for controlling the 3D printer of Fig. 1 by using a mobile device according to various embodiments.

Hereinafter, various embodiments for controlling the operation of the 3D printer (see reference number 1 of Fig. 1) through manipulation of a mobile device 200 will be described.

Referring to Fig. 10, the 3D printer (see reference numeral 1 of Fig. 1) according to the current embodiment may connected to a mobile device 200 to wirelessly communicate with the mobile device 200. Furthermore, the mobile device 200 may include various applications that are capable of controlling an operation of the 3D printer 1. A user may manipulate the various applications to control various operation s of the 3D printer 1. The user may select a modeling material for modeling a 3D model from various modeling materials through the mobile device 200.

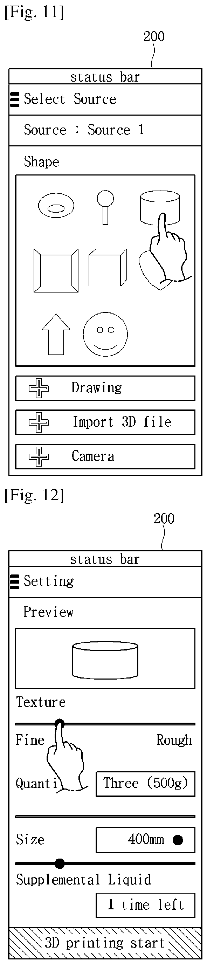

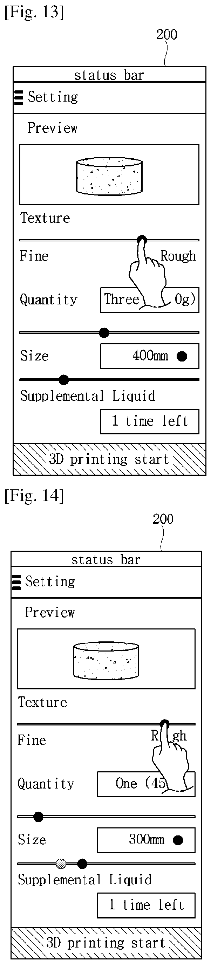

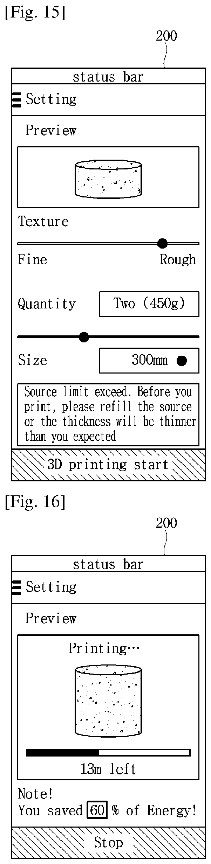

Referring to Fig. 11, the user may select a configuration and shape of the 3D model through the mobile device 200. Referring to Figs. 12 and 13, the user may adjust texture of the 3D model selected by the mobile device 200 to change surface roughness. Referring to Fig. 14, the mobile device 200 may provide a quantity of the 3D model that is capable of being modeled through the adjustment in texture by the user. Referring to Fig. 15, the mobile device 200 may provide a warning pop-up to the user if the number of 3D model that is not modeled by using the present modeling material is selected. Referring to Fig. 16, the mobile device 200 may provide a progress process to the user when the 3D model is modeled.

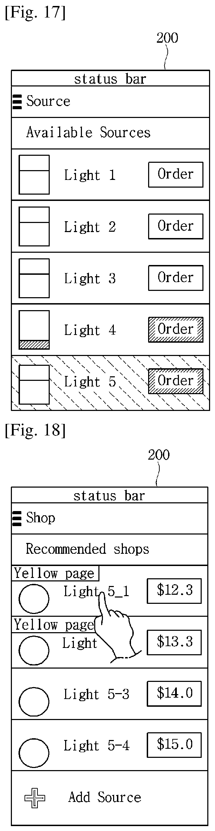

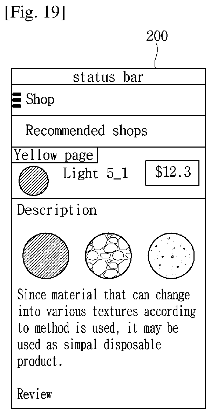

Referring to Figs. 17 and 18, the user may select a desired light source from various light sources through the mobile device 900. Referring to Fig. 19, the mobile device 200 may provide an explanation page with respect to the selected light source to the user.

As described above, the 3D printer 1 according to the current embodiment may be wirelessly connected to the mobile device 200 so that the 3D printer 1 is controlled in operation by manipulating the mobile device 200. Since the above-described embodiments are described as examples, various interfaces that are executed in the 3D printer 1 according to another embodiment except for the foregoing embodiments may be supplied into the application of the mobile device 200.

## Claims

1. A 3D printer (1) having:
a material casing (10) accommodating a modeling material (S) for modeling a 3D model;
a light source unit (100) supplying light onto the modeling material (S) to cure the modeling material (S);
a stage (20) on which the modeling material (S) cured by the light source unit (100) is seated, the stage (20) being disposed to be movable into the material casing (10);
a stage driving unit (30) connected to the stage (20) to provide a driving force for moving the stage (20); and
a control unit (509 controlling operations of the light source unit (100) and the stage driving unit (30), wherein the light source unit (100) is provided as an LED assembly for surface-illustrating light onto the modeling material (S), **characterized in that** the light source unit (100) has an area corresponding to that of the bottom surface the modeling material (S) within the material casing (10), and the stage driving unit (30) is adapted to move the stage (20) in three axes.

2. The 3D printer (1) according to claim 1, wherein the light source unit (100) comprises:
an LED board (110) electrically connected to the control unit (50); and
an LED array (120) disposed on the LED board (110), the LED array (120) being constituted by a plurality of LEDs.

3. The 3D printer (1) according to claim 2, wherein the control unit (50) controls the intensity of light emitted from the LED array (120).

4. The 3D printer (1) according to claim 3, wherein the control unit (50) independently controls the intensity of light emitted from each of the LEDs.

5. The 3D printer (1) according to claim 2, wherein the control unit (50) controls a temperature of the LED array.

6. The 3D printer (1) according to claim 5, wherein the control unit (50) independently controls a temperature of each of the LEDs.

7. The 3D printer (1) according to claim 2, wherein the plurality of LEDs comprise LEDs having at least two wavelength bands.

8. The 3D printer (1) according to claim 2, wherein the plurality of LEDs comprise ultraviolet light emitting diodes.

9. The 3D printer (1) according to claim 1, wherein the light source unit (100) is disposed parallel to a bottom surface of the modeling material (S).

10. The 3D printer (1) according to claim 1, wherein the modeling material (S) comprises a photo-curable liquid resin composite.

## Patentansprüche

1. 3D-Drucker (1) umfassend:
ein Materialgehäuse (10), das ein Modellierungsmaterial (S) zum Modellieren eines 3D-Modells aufnimmt;
eine Lichtquelleneinheit (100), die Licht auf das Modellierungsmaterial (S) zuführt, um das Modellierungsmaterial (S) zu härten;
einen Tisch (20), auf dem das von der Lichtquelleneinheit (100) gehärtete Modellierungsmaterial (S) gesetzt wird, wobei der Tisch (20) so angeordnet ist, dass er in das Materialgehäuse (10) bewegbar ist;
eine Tischantriebseinheit (30), die mit dem Tisch (20) verbunden ist, um eine Antriebskraft zum Bewegen des Tischs (20) bereitzustellen; und
eine Steuereinheit (509), die Betriebsvorgänge der Lichtquelleneinheit (100) und der Tischantriebseinheit (30) steuert,
wobei die Lichtquelleneinheit (100) als eine LED-Baugruppe zur Oberflächenbestrahlung von Licht auf das Modellierungsmaterial (S) vorgesehen ist, **dadurch gekennzeichnet, dass** die Lichtquelleneinheit (100) eine Fläche aufweist, die der Bodenfläche des Modellierungsmaterials (S) innerhalb des Materialgehäuses (10) entspricht, und die Tischantriebseinheit (30) so ausgelegt ist, dass sie den Tisch (20) in drei Achsen bewegt.

2. 3D-Drucker (1) nach Anspruch 1, wobei die Lichtquelleneinheit (100) umfasst:
eine LED-Platine (110), die elektrisch mit der Steuereinheit (50) verbunden ist; und
eine LED-Anordnung (120), die auf der LED-Platine (110) angeordnet ist, wobei die LED-Anordnung (120) aus einer Mehrzahl von LEDs besteht.

3. 3D-Drucker (1) nach Anspruch 2, wobei die Steuereinheit (50) die Intensität von Licht, das von der LED-Anordnung (120) emittiert wird, steuert.

4. 3D-Drucker (1) nach Anspruch 3, wobei die Steuereinheit (50) unabhängig die Intensität von Licht, das von jeder der LEDs emittiert wird, steuert.

5. 3D-Drucker (1) nach Anspruch 2, wobei die Steuereinheit (50) eine Temperatur der LED-Anordnung steuert.

6. 3D-Drucker (1) nach Anspruch 5, wobei die Steuereinheit (50) unabhängig eine Temperatur jeder der LEDs steuert.

7. 3D-Drucker (1) nach Anspruch 2, wobei die Mehrzahl von LEDs LEDs mit mindestens zwei Wellenlängenbändern umfasst.

8. 3D-Drucker (1) nach Anspruch 2, wobei die Mehrzahl von LEDs Ultraviolett-Leuchtdioden umfasst.

9. 3D-Drucker (1) nach Anspruch 1, wobei die Lichtquelleneinheit (100) parallel zu einer Bodenfläche des Modellierungsmaterials (S) angeordnet ist.

10. 3D-Drucker (1) nach Anspruch 1, wobei das Modellierungsmaterial (S) einen lichthärtbaren flüssigen Harzverbundstoff umfasst.

## Revendications

1. Imprimante 3D (1) comprenant :
un boîtier pour matériau (10) logeant un matériau de modelage (S) destiné à modeler un modèle 3D ;
une unité de source de lumière (100) alimentant en lumière le matériau de modelage (S) pour durcir le matériau de modelage (S) ;
un plateau (20) sur lequel est placé le matériau de modelage (S) durci par l'unité de source de lumière (100), le plateau (20) étant conçu pour être mobile dans le boîtier pour matériau (10) ;
une unité de commande de plateau (30) reliée au plateau (20) pour fournir une force de commande servant à déplacer le plateau (20) ; et
une unité de commande (509) commandant les opérations de l'unité de source de lumière (100) et de l'unité de commande de plateau (30),
l'unité de source de lumière (100) étant conçue comme un ensemble DEL pour éclairer de lumière la surface du matériau de modelage (S),
**caractérisée en ce que** l'unité de source de lumière (100) présente une zone correspondant à celle du fond du matériau de modelage (S) dans le boîtier pour matériau (10) et l'unité de commande de plateau (30) étant conçue pour déplacer le plateau (20) dans trois axes.

2. Imprimante 3D (1) selon la revendication 1, l'unité de source de lumière (100) comprenant :
une carte DEL (110) connectée électriquement à l'unité de commande (50) ; et
un réseau DEL (120) disposé sur la carte DEL (110), le réseau DEL (120) étant constitué d'une pluralité de DEL.

3. Imprimante 3D (1) selon la revendication 2, l'unité de commande (50) réglant l'intensité de la lumière émise par le réseau DEL (120).

4. Imprimante 3D (1) selon la revendication 3, l'unité de commande (50) commandant indépendamment l'intensité de la lumière émise à partir de chacune des DEL.

5. Imprimante 3D (1) selon la revendication 2, l'unité de commande (50) réglant la température du réseau DEL.

6. Imprimante 3D (1) selon la revendication 5, l'unité de commande (50) réglant indépendamment la température de chacune des DEL.

7. Imprimante 3D (1) selon la revendication 2, la pluralité des DEL comprenant des DEL ayant au moins deux bandes de longueur d'onde.

8. Imprimante 3D (1) selon la revendication 2, la pluralité des DEL comprenant des diodes électroluminescentes à ultraviolet.

9. Imprimante 3D (1) selon la revendication 1, l'unité de source de lumière (100) étant parallèle à un fond du matériau de modelage (S).

10. Imprimante 3D (1) selon la revendication 1, le matériau de modelage (S) comprenant un composite de résine liquide photodurcissable.
